# EUROPÄISCHE PATENTSCHRIFT

(11) **EP 2 508 287 B1**
(45) Veröffentlichungstag und Bekanntmachung des Hinweises auf die Patenterteilung: **09.03.2016**
(21) Anmeldenummer: 12159700.9
(22) Anmeldetag: 15.03.2012
(51) Int. Cl.: B23D 61/00

(54) **Werkzeug mit Sollbruchstelle**
Tool with built-in breaking point
Outil doté d'un point de rupture

(30) Priorität: 05.04.2011 DE 102011016662
(43) Veröffentlichungstag der Anmeldung: 10.10.2012
(73) Patentinhaber: C. & E. Fein GmbH, 73529 Schwäbisch Gmünd-Bargau (DE)
(72) Erfinder: Früh, Uwe, 72820 Sonnenbühl (DE); Mann, Rainer, 73434 Aalen-Unterrombach (DE)
(74) Vertreter: Witte, Weller & Partner Patentanwälte mbB

(56) Entgegenhaltungen:
- EP-A2- 0 881 023
- DE-A1-102008 001 399
- US-A- 3 889 368
- US-A- 5 706 583
- US-A1- 2004 250 423
- US-A1- 2006 053 631
- US-A1- 2007 101 576
- US-B1- 8 162 784

## Beschreibung

Die Erfindung betrifft ein Werkzeug für eine handgehaltene Werkzeugmaschine, insbesondere zum Sägen, Schleifen, Schneiden, Schaben oder Raspeln, insbesondere für ein oszillierend angetriebenes Elektrowerkzeug, wobei am Arbeitsbereich mindestens eine Sollbruchstelle vorgesehen ist, die ein Abbrechen eines Teils des Werkzeugs erlaubt.
Ein derartiges Werkzeug ist aus der DE 10 2008 001 399 A1 bekannt.
Es handelt sich hierbei um ein Stichsägeblatt mit einem länglichen Sägeblattkörper mit einem Spannschaft und einer Sägeblattspitze sowie mit einer Schneide, die eine Verzahnung trägt. Entlang seiner Längsachse finden sich eine Reihe von Sollbruchstellen, die quer zur Schneide verlaufen, wodurch ein Verkürzen des Sägeblattes möglich ist.
Auf diese Weise kann die Länge des Sägeblattes an verschiedene Arbeitsbedingungen angepasst werden.
Ähnliche Schneid- oder Sägewerkzeuge sind aus der US 5 706 583 A, aus der US 2006/053631 A1 und der US 2007/0101576 A1 bekannt.
Auch hierbei können die Schneiden durch Abbrechen eines Teils des Werkzeugs entlang einer Sollbruchstelle verkürzt oder verändert werden.

Im Stand der Technik sind vielfältige Formen von Werkzeugen bekannt, die in Verbindung mit Oszillationsantrieben verwendet werden können. Solche Werkzeuge werden insbesondere zum Sägen, Schleifen, Schneiden, Schaben oder Raspeln verwendet. Aus der EP 0 881 023 A2 ist bspw. eine Reihe von Schneid- bzw. Schleifwerkzeugen bekannt, die in Verbindung mit einem Oszillationsantrieb verwendet werden können, um insbesondere Schnitte unter räumlich engen begrenzten Bedingungen ausführen zu können, bspw. um rechteckförmige Ausnehmungen z.B. an Rahmen, insbesondere durch Tauchschnitte ausführen zu können. Hierzu kann z.B. eine geradlinige Schneide mit einer Verzahnung vorgesehen sein, an die sich auf beiden Seiten unverzahnte Seitenkanten in einem Winkel von weniger als 90° anschließen. Gleichfalls können die beiden Seitenkanten zueinander parallel angeordnet sein.

Diverse weitere Varianten von Werkzeugen, die in Verbindung mit Oszillationsantrieben verwendet werden können, sind bekannt.

Die Form dieser Werkzeuge ist jeweils auf einen bestimmten Einsatzzweck ausgerichtet. So gibt es bspw. breite Sägeblätter für längere Schnitte und schmale Sägeblätter für kleinere Schnitte oder kleine Aussparungen. Oder es gibt lange Werkzeuge und kurze Werkzeuge zum Sägen von mehr oder weniger dicken Werkstücken.

Vor diesem Hintergrund liegt der Erfindung die Aufgabe zugrunde, ein Werkzeuggemäß der eingangs genannten Art derart zu verbessern, dass auch dann, wenn die Schneide ganz oder teilweise verschlissen ist, eine weitere Nutzung des Werkzeugs ermöglicht wird.

Diese Aufgabe wird bei einem Werkzeug gemäß der eingangs genannten Art dadurch gelöst, dass mindestens eine Sollbruchstelle entlang einer Schneide verläuft, um bei Abbrechen eines Teils eine neue Schneide freizulegen.
Die Aufgabe der Erfindung wird auf diese Weise gelöst.
Erfindungsgemäß wird nämlich bei Abbrechen eines Teils entlang einer Sollbruchstelle erneut eine Schneide freigelegt, so dass das Werkzeug weiter verwendet werden kann.
Auf diese Weise wird die Einsatzzeit für das erfindungsgemäße Werkzeug deutlich vergrößert.

Ferner kann nämlich das Werkzeug selbst durch ein Abbrechen eines Teils entlang der Sollbruchstelle verändert werden. Damit kann das Werkzeug zumindest in zwei verschiedenen Ausführungsformen verwendet werden, nämlich im Auslieferungszustand, in dem die Sollbruchstelle noch intakt ist, sowie in einem veränderten Zustand, in dem zumindest ein Teil des Werkzeugs entlang der Sollbruchstelle abgebrochen wurde. Auf diese Weise wird das Werkzeug verändert, so dass sich eine veränderte Wirkungsweise beim Arbeiten ergibt. Werden mehrere Sollbruchstellen vorgesehen, so kann auf diese Weise eine Reihe von verschiedenen Ausführungen eines Werkzeugs realisiert werden.

Gemäß einer weiteren Ausgestaltung der Erfindung weist das Werkzeug einen Arbeitsbereich auf, an dem die mindestens eine Sollbruchstelle ausgebildet ist.

Hierbei kann durch die mindestens eine Sollbruchstelle eine Veränderung des Arbeitsbereichs durch Abbrechen eines Teils des Werkzeuges bewirkt werden.

Es kann sich hierbei um eine Verkleinerung des Arbeitsbereichs durch Abbrechen eines Teils des Werkzeugs handeln.

Des Weiteren kann das Werkzeug eine Schneide aufweisen, die durch Abbrechen des mindestens einen Teils veränderbar ist.

Beispielsweise kann die Schneide durch Abbrechen des mindestens einen Teils verkürzbar sein.

Auf diese Weise lassen sich verschiedene Einsatzbreiten bzw. verschiedene Schnittbreiten realisieren.

Weiterhin ist es denkbar, dass die Sollbruchstelle entlang einer Schneide verläuft, die gegenüber einer ersten Schneide eine veränderte Verzahnung aufweist.

Auf diese Weise ist es ermöglicht, das Werkzeug mit verschiedenen Verzahnungen zu verwenden, wobei durch Abbrechen eines Teils von einer Schneide mit einer ersten Verzahnung auf eine Schneide mit einer zweiten Verzahnung gewechselt werden kann. Beispielsweise kann von einer Schneide mit einer Japanverzahnung, die einen deutlich aggressiveren Schnitt ermöglicht, auf eine übliche Verzahnung gewechselt werden, die für Holz bzw. Metall geeignet ist.

Gemäß einer weiteren Ausgestaltung der Erfindung ist zumindest eine Schneide gerade ausgebildet.

In alternativer Weise kann zumindest eine Schneide auch gekrümmt ausgebildet sein.

Gemäß einer weiteren Ausgestaltung der Erfindung ist ein Befestigungsbereich vorgesehen, der eine Befestigungsöffnung zur vorzugsweise formschlüssigen Verbindung mit einer oszillierend angetriebenen Werkzeugmaschine aufweist.

Hierdurch ist eine sichere und dauerhafte Verbindung mit der oszillierend angetriebenen Werkzeugmaschine für verschiedene Einsatzzwecke ermöglicht.

Weiterhin kann das Werkzeug einen kreisförmigen oder teilkreisförmigen Arbeitsbereich aufweisen, wobei die mindestens eine Sollbruchstelle vorzugsweise einen Kreisabschnitt oder einen Kreisausschnitt definiert.

So kann etwa ein rundes Sägeblatt derart verwendet werden, dass im Auslieferungszustand damit weniger nahe an Randbereichen gesägt werden kann. Bricht man einen Teil entlang einer Sollbruchstelle ab, so können dabei eine oder mehrere gerade Kanten entstehen, und somit kann näher an Randbereichen gearbeitet werden. Oder es kann eine andere Schneide freigelegt werden, die sich auf einem verringerten Durchmesser befindet und somit eine stärkere Krümmung aufweist.

Die Sollbruchstelle ist vorzugsweise durch eine Materialschwächung oder durch mindestens einen Durchbruch unter Verbleiben mindestens eines Steges gebildet.

Hierbei kann die Sollbruchstelle etwa durch eine Laserbehandlung, eine Erodierbehandlung, einen Prägevorgang oder eine Schleifbehandlung gebildet sein.

Auf diese Weise ergibt sich eine einfache Herstellungsmöglichkeit für die Sollbruchstelle. Dabei ist diese selbstverständlich so zu treffen, dass im normalen Gebrauch ein Abbrechen des Werkzeugs an der Sollbruchstelle nicht zu befürchten ist. Sind Durchbrüche vorhanden, so müssen die stehenbleibenden Stege eine ausreichende Stabilität gewährleisten.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen. Weitere Merkmale und Vorteile der Erfindung ergeben sich aus der nachfolgenden Beschreibung, bevorzugte Ausführungsbeispiele unter Bezugnahme auf die Zeichnung. Es zeigen:
- Fig. 1: eine Aufsicht einer ersten Ausführung eines erfindungsgemäßen Werkzeuges;
- Fig. 2: eine Aufsicht einer zweiten Ausführung eines erfindungsgemäßen Werkzeuges in einer gegenüber der Darstellung gemäß Fig. 1 vergrößerten Darstellung und
- Fig. 3: eine Aufsicht einer dritten Ausführung eines erfindungsgemäßen Werkzeuges.

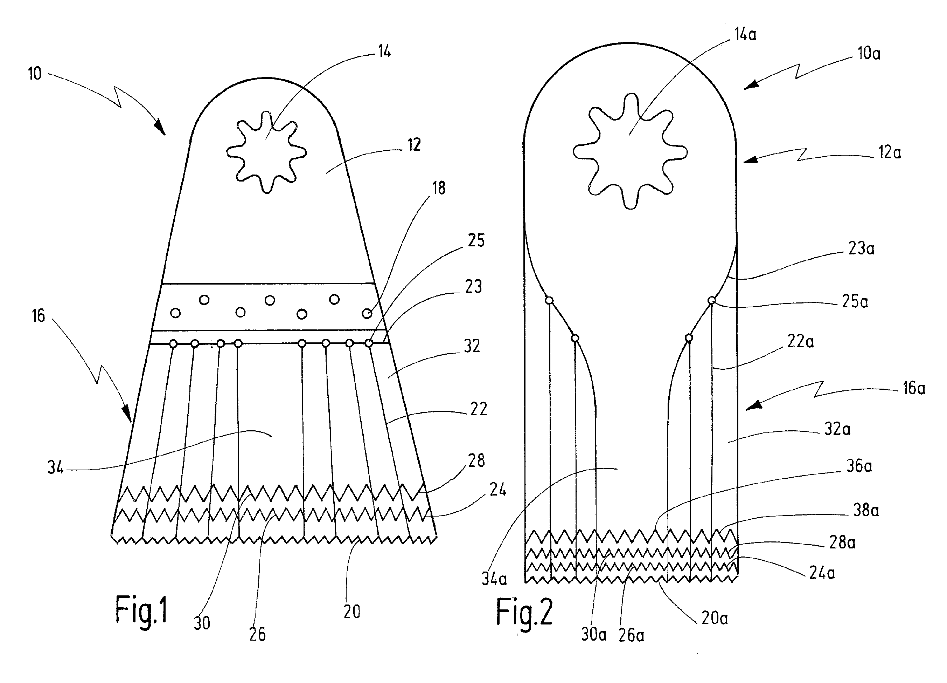

In Fig. 1 ist eine erste Ausführung eines erfindungsgemäßen Werkzeuges in der Aufsicht dargestellt und insgesamt mit Ziffer 10 bezeichnet. Das Werkzeug 10 ist als ein Sägewerkzeug ausgebildet, das in Verbindung mit einem oszillierend angetriebenen Elektrowerkzeug in Form eines Oszillationsantriebs verwendet wird.

Derartige Oszillationsantriebe sind bekannt, bspw. aus der zuvor erwähnten EP 0 881 023 A1. Die Abtriebswelle des Oszillationsantriebes wird hierbei in Schwingungen um ihre Längsachse versetzt, und zwar mit einer Oszillationsfrequenz, die etwa zwischen 5.000 und 25.000 Oszillationen pro Minute liegt, und mit einem Schwenkwinkel, der etwa zwischen 0,5° und 5° beträgt. Um eine sichere Befestigung des Werkzeugs 10 an der Abtriebswelle des zugehörigen Oszillationsantriebes zu gewährleisten, ist am Werkzeug 10 ein Befestigungsbereich 12 vorgesehen, an dem eine Befestigungsöffnung 14 ausgebildet ist. Die Befestigungsöffnung 14 ist in ihrer Form auf eine zugeordnete Form der Abtriebswelle des Oszillationsantriebs abgestimmt, um hiermit eine formschlüssige Verbindung zu gewährleisten. Es kann sich um beliebig geformte Befestigungsöffnungen 14 handeln, etwa mit einer Mehrzahl von nach außen weisenden Ausbuchtungen oder abgerundeten Spitzen, wobei benachbarte Ausbuchtungen oder abgerundete Spitzen über zur Mittelachse hin vorlaufende Krümmungsabschnitte miteinander verbunden sind, wie etwa aus der EP 1 213 107 A1 bekannt.

Alternativ kann eine beliebig andere Form vorgesehen sein, bspw. ein Mehrkant, eine Sternform usw. Schließlich ist auch eine Ausgestaltung der Befestigungsöffnung nur in Kreisform möglich, sofern keine formschlüssige Verbindung mit der Abtriebswelle des Oszillationsantriebes vorgesehen ist.

Das Werkzeug 10 weist ferner einen Arbeitsbereich 16 auf, der einstückig mit dem Befestigungsbereich 12 ausgebildet sein kann oder, wie vorliegend in Fig. 1 angedeutet, über eine Folge von Punktschweißungen 18 damit verbunden ist. Wird eine zweiteilige Ausführung gewählt, so können verschiedene Materialien und Herstellungsverfahren für den Befestigungsbereich 12 andererseits und den Arbeitsbereich 16 andererseits verwendet werden, was ggf. eine kostengünstigere Herstellung oder eine höhere Leistungsfähigkeit ermöglicht. Zusätzlich kann auch eine Abkröpfung zwischen Befestigungsbereich 12 und Arbeitsbereich 16 vorgesehen sein (nicht dargestellt).

Das in Fig. 1 dargestellte Werkzeug 10 entspricht in seiner äußeren Form dem Werkzeug gemäß der aus Fig. 2 der EP 0 881 023 A2 bekannten Form. Das Werkzeug 10 weist also einen Arbeitsbereich 16 mit einer geraden Schneide 20 auf, die eine Verzahnung besitzt. An die gerade Schneide 20 schließen sich an beiden Enden nicht verzahnte Seitenkanten an, die jeweils einen Winkel mit der Schneide 20 einschließen, der kleiner als 90° ist, bspw. etwa 70° bis 85° beträgt. Hierbei sind beide Winkel gleich, so dass das Werkzeug 10 insgesamt symmetrisch aufgebaut ist.

Erfindungsgemäß ist nun eine Mehrzahl von Sollbruchstellen beidseits eines zentralen rechteckförmig ausgebildeten Bereiches 34 am Arbeitsbereich ausgebildet. Beispielhaft ist auf einer Seite eine von der Schneide 20 aus parallel zur Außenkante verlaufende Sollbruchstelle 22 bezeichnet, die in einem Punkt 25 ausläuft und von der aus sich eine weitere Sollbruchstelle 23 bis hin zur Seitenkante erstreckt. Die Sollbruchstelle 22 und die zugeordnete Sollbruchstelle 23 können dazu genutzt werden, bspw. unter Zuhilfenahme einer Kombizange den hierdurch abgegrenzten Teil 32 des Werkzeugs 10 abzubrechen. Es entsteht dann ein verkleinertes Werkzeug 10 bei dem die Schneide 20 um einen entsprechenden Betrag verkürzt ist. Dies bedeutet bei der Verwendung als Säge entsprechend verkürzte Sägeschnitte, etwa wenn ein Tauchschnitt in volles Material ausgeführt wird.

Zusätzlich können weitere nachfolgende Sollbruchstellen auf derselben Seite und/oder auf der gegenüberliegenden Seite verwendet werden, um den Arbeitsbereich 16 des Werkzeugs 10 entsprechend zu verkleinern, wie aus Fig. 1 ersichtlich ist.

Auf diese Weise können verschiedene Schnittbreiten an der Schneide 20 am Arbeitsbereich 16 realisiert werden. Eine minimale Schnittbreite verbleibt, wenn auf beiden Seiten des zentralen Bereiches 34 alle durch Sollbruchstellen eingefassten Bereiche abgetrennt sind. Es verbleibt dann der zentrale rechteckförmige Bereich 34, der auf beiden Seiten zueinander parallele, gerade Seitenkanten aufweist.

Das Abtrennen von Teilen 32 kann neben einer Verkleinerung des Arbeitsbereiches 16 auch dazu genutzt werden, die Schneide oder einen Teil der Schneide zu erneuern, wenn diese stumpf geworden ist.

Insbesondere bei der Ausführung gemäß Fig. 1 ist damit zu rechnen, dass die Randbereiche der Schneide 20 schneller abgenutzt werden als der mittlere Teil der Schneide. So kann die Schneide 20 durch Abtrennen von äußeren, stumpf gewordenen Bereichen verkleinert werden, so dass dann mit dem noch verbleibenden Teil des Arbeitsbereiches 16 besser gearbeitet werden kann.

Zusätzlich bzw. alternativ hierzu kann eine Schneide 24 oder mehrere Schneiden 24, 28 vorzugsweise parallel zur ersten Schneide 20 vorgesehen sein, die gleichfalls mit einer Verzahnung ausgebildet ist. Es wird also mit einer entlang der Schneide 26 bzw. 30 ausgebildeten Sollbruchstelle 24, 28 ein Abbrechen eines äußeren Teils der Schneide 20 entlang der jeweils neuen Schneide 26 bzw. 30 ermöglicht. Es ergibt sich somit eine neue Schneide 26 bzw. 30.

Die neuen Schneiden 26 bzw. 30 können identisch wie die erste Schneide 20 mit einer identischen Verzahnung ausgebildet sein oder können eine davon abweichende Verzahnung aufweisen, wie in Fig. 1 dargestellt.

Bei der Benutzung kann entweder die gesamte Sollbruchstelle 24 entlang der Schneide 26 vollständig abgetrennt werden, so dass sich eine durchgehende zur ersten Schneide 20 parallel verlaufende Schneide 26 ergibt. Im vorliegenden Fall hat die zweite Schneide 26 eine von der ersten Schneide 20 abweichende Verzahnung, bspw. eine Japanverzahnung. Sie kann jedoch auch mit einer identischen Verzahnung ausgeführt sein.

Parallel hierzu verläuft eine weitere Sollbruchstelle 28, die eine zweite Schneide 30 wiederum mit einer entsprechenden Verzahnung festlegt.

Anstatt die gesamte Sollbruchstelle 24 über ihre gesamte Länge abzutrennen, können auch einzelne oder mehrere Teile davon abgetrennt werden.

Eine Abwandlung der zuvor anhand von Fig. 1 beschriebenen Ausführung ist in Fig. 2 dargestellt und insgesamt mit der Ziffer 10a bezeichnet. Das Werkzeug 10a weist wiederum einen Befestigungsbereich 12a mit einer Befestigungsöffnung 14a auf, an den sich ein Arbeitsbereich 16a anschließt. Bei der Ausführung gemäß Fig. 2 sind der Befestigungsbereich 12a und der Arbeitsbereich 16a einstückig und in einer Ebene liegend ausgestaltet. In der Ausgangsform ergibt sich gemäß Fig. 2 ein Werkzeug 10a mit einem rechteckförmigen Arbeitsbereich 16a, an dem eine gerade Schneide 20a mit einer Verzahnung ausgebildet ist. Ausgehend von der Schneide 20a erstrecken sich nicht verzahnte Seitenkanten, die zueinander parallel sind und in den Befestigungsbereich 12a übergehen.

Parallel zur Schneide 20a verlaufen in geringem Abstand dazu drei weitere Schneiden 26a, 30a, 36a an denen Sollbruchstellen 24a, 28a, 38a ausgebildet sind.

Wie zuvor anhand von Fig. 1 beschrieben, kann also etwa nach Abnutzung der Schneide 20a die zweite dazu parallele Schneide 24a freigelegt werden, indem die Sollbruchstelle 24a durchgehend abgebrochen wird, so dass die Schneide 26a, die parallel zur Schneide 20a verläuft, vollständig freigelegt wird. Die Schneide 26a, kann wie in Fig. 2 dargestellt, abweichend von der Schneide 20a ausgebildet sein, kann jedoch auch die gleiche Form und Größe aufweisen.

In der Mitte des Arbeitsbereiches 16a ist ein zentraler Bereich 34a vorgesehen, der ausgehend von der Schneide 20a zueinander parallele Seitenkanten aufweist und der sich beidseitig über gekrümmte Linien nach außen hin erweitert und schließlich in die Außenkanten am Befestigungsbereich 12a übergeht. Dieser zentrale Bereich 34a ist durch eine entsprechend geformte Sollbruchstelle 23a auf beiden Seiten abgegrenzt. Ausgehend vom Befestigungsbereich 12a mit parallelen Außenkanten, ergibt sich bei Verfahren entlang der Sollbruchstelle 23a auf beiden Seiten also ein verjüngter zentraler Bereich 34a, wiederum mit parallelen Außenkanten, der an beiden Seiten über die gekrümmte Sollbruchstelle 23a mit der Außenkante des Befestigungsbereiches 12a verbunden ist. Auf jeder Seite des zentralen Bereiches 34a sind nun parallel zu den Außenkanten insgesamt drei Sollbruchstellen vorgesehen, die an der Schneide 20a auslaufen. Auf der rechten Außenseite ist hierzu eine Sollbruchstelle 22a bezeichnet. Diese geht an einem Punkt 25a in die gekrümmte Sollbruchstelle 23a über. Es kann also durch Abbrechen entlang der Sollbruchstelle 22a und der Sollbruchstelle 23a ausgehend vom Punkt 25a ein äußeres Teil 32a abgetrennt werden. Dadurch wird der Arbeitsbereich 16a auf dieser Seite entsprechend verschlankt, so dass die neue Außenkante entlang der Sollbruchstelle 22a bzw. 23a verläuft. In entsprechender Weise können die weiteren, dazu parallel verlaufenden Sollbruchstellen auf einer Seite oder auf beiden Seiten abgebrochen werden, so dass sich ein entsprechend verschlankter Arbeitsbereich 16a ergibt.

Wie vorstehend bereits erläutert, kann alternativ oder zusätzlich dazu eine der Sollbruchstellen 28a, 38a bzw. 36a benutzt werden, um eine der Schneiden 26a, 30a oder 36a ganz oder teilweise freizulegen.

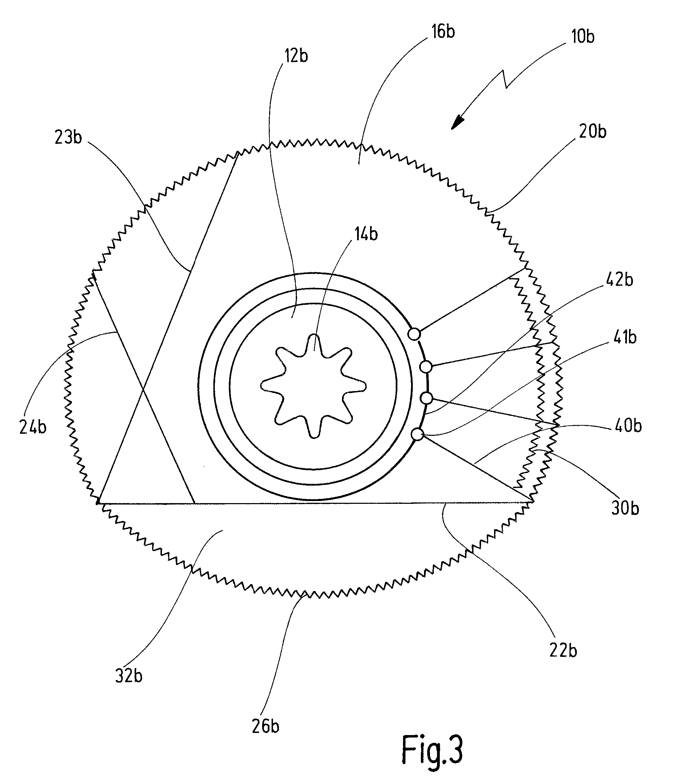

Ein weiteres Ausführungsbeispiel der Erfindung ist in Fig. 3 dargestellt und insgesamt mit Ziffer 10b bezeichnet. Das Werkzeug 10b ist grundsätzlich kreisförmig ausgestaltet und weist einen zentralen Befestigungsbereich 12b wiederum mit einer Befestigungsöffnung 14b gemäß der zuvor anhand von Fig. 1 erläuterten Form auf.

An den Befestigungsbereich 12b schließt sich ein äußerer Arbeitsbereich 16b an. Am Rand ist eine kreisförmige Schneide 20b ausgebildet, die eine Verzahnung aufweist, und die sich etwa über 230° erstreckt und die über eine Sollbruchstelle 22b abgegrenzt ist, die in Form einer Sehne verläuft und so einen Kreisabschnitt definiert. Der Rand zwischen den beiden Schnittpunkten der Sollbruchstelle 22b mit der Schneide 20b ist durch eine teilkreisförmige Schneide 26b abgeschlossen, an der eine Verzahnung ausgebildet ist. Jedoch besitzt die Schneide 26b einen größeren Radius als die Schneide 20b.

Im Ausgangszustand kann also mit dem Werkzeug 10b entweder mit der Schneide 26b gearbeitet werden, sofern relativ lange, aber nicht sehr tiefgehende Schnitte erzeugt werden sollen. Sollen tiefere Schnitte erzeugt werden, so wird der übrige Bereich der Schneide 20b verwendet. Durch Abbrechen des Bereiches 32b zwischen der Sollbruchstelle 22b und der Schneide 26b entsteht ein Kreisabschnitt mit einer geraden Bruchkante. Weitere gerade verlaufende Sollbruchstellen sind mit 23b und 24b angedeutet. Die Sollbruchstelle 23b geht von einem Ende der Sollbruchstelle 22b aus und verläuft zur Schneide 20b hin. Diese Sollbruchstelle 23b hat annähernd die gleiche Länge wie die Sollbruchstelle 22b, oder ist etwas kürzer ausgebildet. Eine weitere Sollbruchstelle 24b geht von einem Bereich der Schneide 20b zwischen dem Schnittpunkt der Sollbruchstelle 23b mit der Schneide 20b und dem Zusammentreffen der Sollbruchstelle 23b mit der Sollbruchstelle 22b an der Schneide 20b aus und endet auf der Sollbruchstelle 22b. Werden alle Sollbruchstellen 22b, 23b, 24b abgebrochen, so verbleibt ein Werkzeug 10b mit einer teilkreisförmigen Schneide 20b, das durch mehrere gerade Abbruchkanten entlang der Linien 22b, 23b, 24b abgegrenzt ist.

Des Weiteren sind in Fig. 3 kreissektorförmige Bereiche eingezeichnet, die ausgehend von der Schneide 20b bis zu einem dazu konzentrischen Teilkreis am Übergang zum Befestigungsbereich 12b verlaufen und durch in Radialrichtung verlaufende Sollbruchstellen 40b abgegrenzt sind. Diese gehen jeweils über Punkte 41 b in eine kreissektorförmig verlaufende Sollbruchstelle 42b über.

Zusätzlich gibt es in diesem Bereich eine konzentrisch zur äußeren Schneide 20b verlaufende Schneide 30b. Diese kann wiederum durch Abbrechen des äußeren Teils entlang einer entlang der Schneide 30b verlaufenden Sollbruchstelle abgebrochen werden, so dass die Schneide 30b in diesem Bereich konzentrisch zur äußeren Schneide 20b verkleinert ist und konzentrisch zur äußeren Schneide 20b verläuft.

Es versteht sich, dass abweichend von den dargestellten Ausführungsbeispielen beliebige Ausführungen von Sollbruchstellen möglich sind, um verkleinerte Arbeitsbereiche zu erzeugen, entweder mit verkürzten Schneiden gegenüber der ursprünglichen Schneide, oder aber mit veränderten Schneiden gegenüber der ursprünglichen Schneide, die ggf. parallel oder abweichend von der ursprünglichen Schneide verlaufen.

## Patentansprüche

1. Werkzeug für eine handgehaltene, oszillierend angetriebene Werkzeugmaschine, insbesondere zum Sägen, Schleifen, Schneiden, Schaben oder Raspeln, insbesondere für ein oszillierend angetriebenes Elektrowerkzeug, mit einem Befestigungsbereich (12, 12a,b), der mit einem Arbeitsbereich (16, 16a,b) verbunden ist, wobei am Arbeitsbereich (16, 16a,b) mindestens eine Sollbruchstelle (22, 22a,b, 23, 23a,b, 24, 24a,b, 28, 38a, 40b, 42b) vorgesehen ist, die ein Abbrechen eines Teils (32, 32a,b) des Werkzeugs (10, 10a,b) erlaubt, **dadurch gekennzeichnet, dass** mindestens eine Sollbruchstelle (24, 24a,b, 28, 28a, 38a) entlang einer Schneide (26, 26a, 30, 30a,b, 36a) verläuft, um bei Abbrechen eines Teils eine neue Schneide freizulegen.

2. Werkzeug nach Anspruch 1, **dadurch gekennzeichnet, dass** die mindestens eine Sollbruchstelle (22, 22a,b, 23, 23a,b, 24, 24a,b, 28, 38a, 40b, 42b) eine Veränderung des Arbeitsbereichs (16, 16a,b) durch Abbrechen eines Teils (32, 32a,b) des Werkzeugs (10, 10a,b) erlaubt.

3. Werkzeug nach Anspruch 2, **dadurch gekennzeichnet, dass** die mindestens eine Sollbruchstelle (22, 22a,b, 23, 23a,b, 24, 24a,b, 28, 38a, 40b, 42b) eine Verkleinerung des Arbeitsbereichs (16, 16a,b) durch Abbrechen eines Teils (32, 32a,b) des Werkzeugs (10, 10a,b) erlaubt.

4. Werkzeug nach einem der vorhergehenden Ansprüche, **dadurch gekennzeichnet, dass** eine Schneide (20, 20a,b, 26, 26a,b, 30, 30a,b, 36a) vorgesehen ist, die durch Abbrechen des mindestens einen Teils (32, 32a,b) veränderbar ist.

5. Werkzeug nach Anspruch 4, **dadurch gekennzeichnet, dass** die Schneide (20, 20a,b, 26, 26a,b, 30, 30a,b, 36a) durch Abbrechen des mindestens einen Teils (32, 32a,b) verkürzbar ist.

6. Werkzeug nach einem der vorhergehenden Ansprüche, **dadurch gekennzeichnet, dass** zumindest eine Schneide (20, 20a, 26, 26a, 30, 30a, 36a) gerade ausgebildet ist.

7. Werkzeug nach eunem der vorhergehenden Ansprüche, **dadurch gekennzeichnet, dass** zumindest eine Schneide (20b, 26b, 30b) gekrümmt ausgebildet ist.

8. Werkzeug nach einem der Ansprüche 4 bis 7, **dadurch gekennzeichnet, dass** die Schneide (20, 20a,b, 26, 26a,b, 30, 30a,b, 36a) eine Verzahnung aufweist.

9. Werkzeug nach einem der vorhergehenden Ansprüche, **dadurch gekennzeichnet, dass** zumindest eine Sollbruchstelle entlang einer Schneide (26, 26a, 30, 30a, 30b, 36a) verläuft, die eine gegenüber einer ersten Schneide veränderte Verzahnung aufweist.

10. Werkzeug nach einem der vorhergehenden Ansprüche, **dadurch gekennzeichnet, dass** der Befestigungsbereich (12, 12a,b) eine Befestigungsöffnung (14, 14a,b) zur Verbindung mit einer oszillierend angetriebenen Werkzeugmaschine aufweist.

11. Werkzeug nach Anspruch 10, **dadurch gekennzeichnet, dass** die Befestigungsöffnung (14, 14a,b) zur formschlüssigen Verbindung mit der oszillierend angetriebenen Werkzeugmaschine ausgebildet ist.

12. Werkzeug nach einem der vorhergehenden Ansprüche, **dadurch gekennzeichnet, dass** der Arbeitsbereich (16b) kreisförmig oder teilkreisförmig ausgebildet ist, wobei die mindestens eine Sollbruchstelle vorzugsweise einen Kreisabschnitt, oder einen Kreisausschnitt definiert.

13. Werkzeug nach einem der vorhergehenden Ansprüche, **dadurch gekennzeichnet, dass** die mindestens eine Sollbruchstelle (22, 22a,b, 23, 23a,b, 24, 24a,b, 28) durch eine Materialschwächung oder durch mindestens einen Durchbruch unter Verbleiben mindestens eines Steges gebildet ist.

14. Werkzeug nach Anspruch 13, **dadurch gekennzeichnet, dass** die Sollbruchstelle (22, 22a,b, 23, 23a,b, 24, 24a,b, 28, 38a, 40b, 42b) durch eine Laserbehandlung, eine Erodierbehandlung, einen Prägevorgang oder durch eine Schleifbehandlung gebildet ist.

## Claims

1. A tool for a hand-held power tool appliance driven in an oscillating manner, in particular for sawing, grinding, cutting, scraping or rasping, in particular for an oscillatingly driven electric power tool, comprising a fastening region (12, 12a,b) which is connected with a working region (16, 16a,b), wherein at the working region (16, 16a,b) at least one predetermined break location (22, 22a,b, 23, 23a,b, 24, 24a,b, 28, 38a, 40b, 42b) is provided, which allows a part (32, 32a,b) of the tool (10, 10a,b) to be broken off, **characterized in that** at least one predetermined break location (24, 24a,b, 28, 28a, 38a) extends along a cutting edge (26, 26a, 30, 30a, b, 36a), in order to expose a new cutting edge when a part is broken off.

2. The tool of claim 1, **characterized in that** the at least one predetermined break location (22, 22a,b, 23, 23a,b, 24, 24a,b, 28, 38a, 40b, 42b) allows the working region (16, 16a,b) to be altered by breaking off a part (32, 32a,b) of the tool (10, 10a,b).

3. The tool of claim 2, **characterized in that** the at least one predetermined break location (22, 22a,b, 23, 23a,b, 24, 24a,b, 28, 38a, 40b, 42b) allows the working region (16, 16a,b) to be reduced in size by breaking off a part (32, 32a,b) of the tool (10, 10a,b).

4. The tool of any of the preceding claims, **characterized in that** a cutting edge (20, 20a,b, 26, 26a,b, 30, 30a,b, 36a) is provided, which can be altered by breaking off the at least one part (32, 32a,b).

5. The tool of claim 4, **characterized in that** the cutting edge (20, 20a,b, 26, 26a,b, 30, 30a,b, 36a) can be shortened by breaking off the at least one part (32, 32a,b).

6. The tool of any of the preceding claims, **characterized in that** at least one cutting edge (20, 20a, 26, 26a, 30, 30a, 36a) is configured as a straight cutting edge.

7. The tool of any of the preceding claims, **characterized in that** at least one cutting edge (20b, 26b, 30b) is configured as a curved cutting edge.

8. The tool according to any one of Claims 4 to 7, **characterized in that** the cutting edge (20, 20a,b, 26, 26a,b, 30, 30a,b, 36a) comprises a toothing.

9. The tool of any of the preceding claims, **characterized in that** at least one predetermined break location extends along a cutting edge (26, 26a, 30, 30a, 30b, 36a) having a toothing that differs from that provided on a first cutting edge.

10. The tool of any of the preceding claims, **characterized in that** the fastening region (12, 12a,b) comprises a fastening aperture (14, 14a,b) configured for connection to a power tool.

11. The tool of claim 10, **characterized in that** the fastening region (12, 12a,b) comprises a fastening aperture (14, 14a,b) configured for form-locking connection to a power tool.

12. The tool of any of the preceding claims, **characterized in that** the working region (16b) is configured circular or partially circular, wherein the at least one predetermined break location preferably defines a portion of a circle, or a segment of a circle.

13. The tool of any of the preceding claims, **characterized in that** the at least one predetermined break location (22, 22a,b, 23, 23a,b, 24, 24a,b, 28) is constituted by a material weakening or by at least one through-hole with at least one web remaining.

14. The tool of claim 13, **characterized in that** the predetermined break location (22, 22a,b, 23, 23a,b, 24, 241a,b, 28, 38a, 40b, 42b) is formed by a laser treatment, an erosive treatment, a stamping process or a grinding treatment.

## Revendications

1. Outil pour une machine-outil manuelle, entraînée en oscillation, en particulier pour scier, meuler, couper, racler ou râper, en particulier pour un outil électrique entraîné en oscillation, comprenant une région de fixation (12, 12a,b), qui est connectée à une région de travail (16, 16a,b), au moins un point destiné à la rupture (22, 22a,b, 23, 23a,b, 24, 24a,b, 28, 38a, 40b, 42b) étant prévu au niveau de la région de travail (16, 16a,b), lequel permet une rupture de la partie (32, 32a,b) de l'outil (10, 10a,b), **caractérisé en ce qu'**au moins un point destiné à la rupture (24, 24a,b, 28, 28a, 38a) s'étend le long d'une arête de coupe (26, 26a, 30, 30a,b, 36a) afin d'exposer une nouvelle arête de coupe lors de la rupture d'une partie.

2. Outil selon la revendication 1, **caractérisé en ce que** l'au moins un point destiné à la rupture (22, 22a,b, 23, 23a,b, 24, 24a,b, 28, 38a, 40b, 42b) permet une modification de la région de travail (16, 16a,b) par rupture d'une partie (32, 32a,b) de l'outil (10, 10a,b).

3. Outil selon la revendication 2, **caractérisé en ce que** l'au moins un point destiné à la rupture (22, 22a,b, 23, 23a,b, 24, 24a,b, 28, 38a, 40b, 42b) permet une réduction de la région de travail (16, 16a,b) par rupture d'une partie (32, 32a,b) de l'outil (10, 10a,b).

4. Outil selon l'une quelconque des revendications précédentes, **caractérisé en ce qu'**une arête de coupe (20, 20a,b, 26, 26a,b, 30, 30a,b, 36a) est prévue, laquelle peut être modifiée par rupture de l'au moins une partie (32, 32a,b).

5. Outil selon la revendication 4, **caractérisé en ce que** l'arête de coupe (20, 20a,b, 26, 26a,b, 30, 30a,b, 36a) peut être raccourcie par rupture de l'au moins une partie (32, 32a,b).

6. Outil selon l'une quelconque des revendications précédentes, **caractérisé en ce qu'**au moins une arête de coupe (20, 20a, 26, 26a, 30, 30a,b, 36a) est réalisée sous forme droite.

7. Outil selon l'une quelconque des revendications précédentes, **caractérisé en ce qu'**au moins une arête de coupe (20b, 26b, 30b) est réalisée sous forme courbe.

8. Outil selon l'une quelconque des revendications 4 à 7, **caractérisé en ce que** l'arête de coupe (20, 20a,b, 26, 26a,b, 30, 30a,b, 36a) présente une denture.

9. Outil selon l'une quelconque des revendications précédentes, **caractérisé en ce qu'**au moins un point destiné à la rupture s'étend le long d'une arête de coupe (26, 26a, 30, 30a, 30b, 36a), lequel présente une denture modifiée par rapport à une première arête de coupe.

10. Outil selon l'une quelconque des revendications précédentes, **caractérisé en ce que** la région de fixation (12, 12a,b) présente une ouverture de fixation (14, 14a,b) pour la connexion à une machine-outil entraînée en oscillation.

11. Outil selon la revendication 10, **caractérisé en ce que** l'ouverture de fixation (14, 14a,b) est réalisée en vue d'une connexion par engagement par correspondance de formes avec la machine-outil entraînée en oscillation.

12. Outil selon l'une quelconque des revendications précédentes, **caractérisé en ce que** la région de travail (16b) est réalisée sous forme circulaire ou sous forme de cercle partiel, l'au moins un point destiné à la rupture définissant de préférence une portion de cercle, ou une section de cercle.

13. Outil selon l'une quelconque des revendications précédentes, **caractérisé en ce que** l'au moins un point destiné à la rupture (22, 22a,b, 23, 23a,b, 24, 24a,b, 28) est formé par un affaiblissement de matière ou par au moins une ouverture dans laquelle demeure au moins une nervure.

14. Outil selon la revendication 13, **caractérisé en ce que** le point destiné à la rupture (22, 22a,b, 23, 23a,b, 24, 24a,b, 28, 38a, 40b, 42b) est formé par un traitement laser, un traitement par érosion, une opération d'estampage ou par un traitement par meulage.
